**Europäisches Patentamt**

**European Patent Office**

**Office européen des brevets**

(11) Veröffentlichungsnummer: **0 049 751**

**A1**

(12) # EUROPÄISCHE PATENTANMELDUNG

(21) Anmeldenummer: **81106272.8**

(22) Anmeldetag: **12.08.81**

(51) Int. Cl.³: **B 01 J 47/04**
 **B 01 J 47/10**

(30) Priorität: **10.10.80 DE 3038259**

(43) Veröffentlichungstag der Anmeldung:
 **21.04.82 Patentblatt 82/16**

(84) Benannte Vertragsstaaten:
 **BE DE FR IT NL SE**

(71) Anmelder: **Uhde GmbH**
 **Deggingstrasse 10 - 12**
 **D-4600 Dortmund 1(DE)**

(72) Erfinder: **Huber, Adalbert, Dipl.-Ing.**
 **Hohenleuchtestrasse 13**
 **D-4755 Holzwickede(DE)**

(54) **Verfahren zur Behandlung von Flüssigkeiten mittels Ionenaustauschern.**

(57) Verfahren zur Behandlung von Flüssigkeiten mittels Ionenaustauschern. Die zu behandelnde Flüssigkeit weist eine Restleitfähigkeit im Bereich von größer 0,2 uS·cm auf und das Ionenaustauschermaterial liegt als Mischbettfilter vor. Die Flüssigkeit wird in senkrechter Strömung von unten nach oben mit solcher Geschwindigkeit durch das Ionenaustauschermaterial geführt, daß ein Schwebebettanteil von 5 - 80 % des Mischbettfilters erhalten wird.

Es wird eine gleichbleibende hohe Reinheit über einen langen Zeitraum erzielt. Dadurch verringert sich pro Jahr der Chemikalienverbrauch für die turnusmäßige Regeneration.

EP 0 049 751 A1

Verfahren zur Behandlung von Flüssigkeiten mittels Ionenaustauschern

Die Erfindung betrifft ein Verfahren zur Behandlung von Flüssigkeiten mittels Ionenaustauschern, wobei die Flüssigkeiten eine Restleitfähigkeit im Bereich von größer 0,2 µS/cm aufweisen und wobei das Ionenaustauschermaterial als Mischbettfilter vorliegt.

Der Reinheitsgrad im Bereich von kleiner 0,2 µS/cm von Flüssigkeiten stellt heute eine gängige Forderung dar und es muß gewährleistet sein, daß dieser Reinheitsgrad längere Zeit, d.h. mehrere Tage bzw. Wochen aufrecht erhalten wird.

Die Feinreinigung von Flüssigkeiten auf Reinheitsgrade im Bereich von kleiner 0,2 µS/cm erfolgt in bekannter Weise mit Ionenaustauschermaterial, welches eine Mischung von stark sauren Kationen- und stark basischen Anionenaustauschermaterial ist. Die Hauptanwendungsgebiete des Mischbettaustauschers sind der Einsatz als Endfilter zur Vollentsalzung und zur Kondensatentsalzung. Der Mischbettaustauscher wird dabei von oben nach unten durchströmt. Die Regenerierung des Ionenaustauschermaterials erfolgt in bekannter Weise innerhalb des Mischbettaustauschers nach vorheriger Trennung des Anionenaustauschermaterials vom Kationenaustauschermaterial.

Es hat sich erwiesen, daß diese bekannte Verfahrensweise der Feinreinigung von Flüssigkeiten und der Regeneration des Austauschermaterials mit erheblichen Nachteilen behaftet ist. Infolge Kanalbildung im Austauschermaterial kommt es zu vorzeitigen Qualitätsschwankungen, d.h. nur kurzen Laufzeiten bei geforderten ständigem Reinheitsgrad. Zusätzlich führt diese Verfahrensweise zu einem hohen Chemikalien-Verbrauch für die Regeneration.

Der Erfindung liegt die Aufgabe zugrunde, daß Verfahren zur Behandlung von Flüssigkeiten derart zu verbessern, daß die aufgezeigten Nachteile wesentlich beseitigt werden.

Diese Aufgabe wird gelöst durch ein Verfahren gemäß dem Hauptpatentanspruch und nach der Ausgestaltung gemäß dem Unteranspruch.

Durch die neuartige Verfahrensweise wird eine gleichbleibende hohe Reinheit, d.h. gute Qualität der Flüssigkeit, in der Regel Wasser, erzielt und dies über einen langen Zeitraum. Die Kapazitätsausnutzung kann wesentlich vergrößert werden. Als Folge der höheren Kapazitätsausnutzung ergibt sich ein niedrigerer spezifischer Chemikalienverbrauch für die Regeneration, was sich wiederum auf die verminderte Abgabe von Regenerationschemikalien an die Umwelt auswirkt.

Die Merkmale der Erfindung und deren technische Vorteile ergeben sich auch aus der nachfolgenden Beschreibung eines Ausführungsbeispiels in Gegenüberstellung zu einem Mischbettfilter in konventioneller Verfahrensweise.

Vorgereinigtes Prozeßwasser, daß bereits Kationenaus- und Anionenausaustauscherstufen durchlaufen hat und einen Rest Salzgehalt von 0,15 m val/l aufweist, wird in einen Mischbettaustauscher geführt. Der Mischbettaustauscher ist so ausgelegt, daß das Wasser ihn mit einer Geschwindigkeit von 68 m/h von unten nach oben durchströmt und ca. 15 % des Mischbettfiltersmaterials als Schwebebett vorliegen.

Beispiel 1

Ein Mischbettfilter aus Kationenaus- und Anionenaustauschermaterial und zwar:

LPxE01001130580

a)  Kationenausaustauscher stark sauer mit Sulfonsäuregruppen, auf Polystyrolbasis mit einer makroporösen
Struktur

b)  Anionenausaustauscher stark basisch, auf
Polystyrolbasis mit makroporöser Struktur

wird im Mengenverhältnis von 1 : 2 und einem Füllungsgrad von 50
% mit dem Austauschermaterial gefüllt.


Das Mischbettfilter wird in konventioneller Auslegung und
Verfahrensweise als Endreinigungsstufe in einer Vollentsalzungsanlage eingesetzt und stündlich mit 300 m3 Wasser mit einer
Reinheit von 0,15 m val/l Salzgehalt belastet. Diese Reinheit
entspricht einer Restleitfähigkeit von ca. 10 $\mu$S/cm.
Das Wasser strömt im Mischbettfilter von oben nach unten.
Anfänglich erreicht man eine Reinheit von 0,06 $\mu$S/cm. Nach 40
Stunden zeigt sich jedoch ein konstanter Abfall, so daß nach 48
Stunden das konventionelle Mischbettfilter außer Betrieb genommen
werden muß. Die folgende Regenerierung wird in bekannter Weise
innerhalb des Mischbettfilters durchgeführt und man benötigt dazu
an Chemikalien:


Schwefelsäure 96 %ig          539 kg/Regeneration
Natronlauge   50 %ig          843 kg/Regeneration
um neutralen Ablauf zu erhalten.


Beispiel 2


Ein Mischbettfilter wird wie in Beispiel 1 mit dem gleichen
Material und Mengenverhältnis bis zu einem Füllungsgrad von 85 %
gefüllt. Der Mischbettaustauscher ist so ausgelegt, daß das zu
reinigende Wasser ihn mit einer Geschwindigkeit von 68 m/h von
unten nach oben durchströmt und dabei ca. 15 % des Mischbettfiltermaterials als Schwebebett vorliegt. Die 300 m3/h Wasser der
gleichen Anfangsreinheit wie in Beispiel 1 strömen jedoch von unten nach oben. Die anfängliche Endreinheit von 0,06 $\mu$S/cm kann jetzt über 55 Stunden in etwa gleich gehalten werden. Nach ca. 60 Stunden geht die Reinheit auf Werte größer als 0,1 $\mu$S/cm zurück und das Filter muß außer Betrieb genommen werden.

Zur Regenerierung des Austauschermaterials wird dieses in bekannter Weise aus dem Mischbettfilter in einen Regenerierbehälter überführt und dort regeneriert. An Chemiaklien werden dazu benötigt:

| | | |
|---|---|---|
| Schwefelsäure | 96 %ig | 311 kg/Regeneration |
| Natronlauge | 50 %ig | 486 kg/Regeneration |

um neutralen Ablauf zu erhalten.

Beispiel 2 zeigt, daß sich für die erfindungsgemäße Verfahrensweise bei gleicher Wassermenge und Anfangsreinheit gegenüber Beispiel 1 ein um mehr als 50 % reduzierter Chemikalienverbrauch für die Regeneration pro Jahr ergibt.

**UHDE**

Uhde GmbH, Dortmund

Eigenes·Zeichen: 10 086

P 30 38 259.3
v. 10.10.80

## Patentansprüche

1. Verfahren zur Behandlung von Flüssigkeiten mittels Ionentauscher, wobei die zulaufende Flüssigkeit eine Restleitfähigkeit im Bereich von größer 0,2 µS/cm aufweist, und das Ionenaustauschermaterial als Mischbettfilter vorliegt, dadurch gekennzeichnet, daß die Flüssigkeit in senkrechter Strömung von unten nach oben mit solcher Geschwindigkeit durch das Ionenaustauschermaterial tritt, daß ein Schwebebettanteil von 5 - 80 % des Mischbettfilters erhalten wird.

2. Verfahren nach Anspruch 1 dadurch gekennzeichnet, daß das beladene Ionenaustauschermaterial nach Trennung in Anionenaustauschermaterial und Kationenaustauschermaterial außerhalb des Mischbettfilters in bekannter Weise regeneriert wird.

A112-77-07

LPxE01001130580

**0049751**

Nummer der Anmeldung

EP 81 10 6272

**Europäisches Patentamt**

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 2 277 775 (GAGARIN HOERO-MU VALLALAT) <br> * Seite 8, Zeilen 1-22 * <br> & DE - A - 2 529 810 <br><br> -- <br><br> US - A - 3 458 436 (MARTINOLA) <br> * Spalten 5,6; Ansprüche 1,2,4, 6 * <br><br> -- <br><br> FR - A - 2 424 050 (PENNWALT CORP.) <br> * Seite 12, Anspruch 1; Seite 13, Ansprüche 6,8,9 * <br> & DE - A - 2 917 277 <br><br> -- | 1 <br><br><br><br><br> 1 <br><br><br><br><br><br> 1,2 | B 01 J 47/04 <br> 47/10 |
| A | FR - A - 2 187 703 (ABWASSERTECH-NIK) <br> & DE - A - 2 228 657 <br><br> ---- | | **RECHERCHIERTE SACHGEBIETE (Int. Cl.³)** <br><br> B 01 J 47/04 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-01-1982 | WENDLING |

EPA form 1503.1   06.78